Europäisches Patentamt

(19) European Patent Office   (11) Publication number: **0 160 794**

Office européen des brevets   **B1**

(12)   **EUROPEAN PATENT SPECIFICATION**

(45) Date of publication of patent specification: **29.06.88**   (51) Int. Cl.⁴: **A 23 L 1/227, A 23 L 1/231**

(21) Application number: **85101950.5**

(22) Date of filing: **22.02.85**

(54) Chicken flavorants and the processes for preparing them.

(30) Priority: **16.04.84 US 600979**

(43) Date of publication of application:
**13.11.85 Bulletin 85/46**

(45) Publication of the grant of the patent:
**29.06.88 Bulletin 88/26**

(84) Designated Contracting States:
**AT BE CH DE FR IT LI LU NL SE**

(56) References cited:
**FR-A-1 146 926**
**FR-A-1 423 176**
**FR-A-1 424 194**
**FR-A-1 487 625**
**GB-A-1 115 610**

**V.H. CHELDELIN et al.: "The chemistry of some life processes", 1964, pages 12-15, Reinhold Publishing Corp., New York, US;**

(73) Proprietor: **SOCIETE DES PRODUITS NESTLE S.A.**
**Case postale 353**
**CH-1800 Vevey (CH)**

(72) Inventor: **Tandy, John Stewart**
**207A Blue Swamp Road**
**Litchfield Connecticut 06759 (US)**

Courier Press, Leamington Spa, England.

## Description

This invention pertains to the field of flavorants and particularly pertains to flavorants which impart a roast or cooked chicken flavor to foodstuffs. More specifically, the present invention is concerned with the preparation of chicken flavorants by reacting leucine and/or its salts as the primary reaction ingredient with other secondary reactants to produce flavorants having increased flavor and aromatic intensity which most closely resemble the natural flavor and aroma of either cooked or roast chicken.

The desirability of providing flavoring agents which closely simulate the flavor and aromatic characteristics of cooked meat has long been recognized. Such flavoring agents may, for example, be employed with non-meat sources of protein so as to make them more palatable and as meat-like as possible. So, too, they may also be employed with meat-containing or meat-based foods or vegetable-type foodstuffs such as condensed soups, dried meats, packaged gravies, casseroles, etc., in order to supplement or enhance these foods whose organoleptic properties may have been affected by their processing.

Various expedients have been suggested in the prior art in attempts to provide flavoring agents having the organoleptic profile of cooked meat. Thus, for example, U.S. Patent No. 2,934,437 describes the preparation of a meat-like flavorant by the reaction of a mixture of a monosaccharide and a source of amino acid. U.S. Patent No. 3,394,015 describes the preparation of a meat-like flavorant from the reaction of a proteinaceous substance with a sulfur-containing compound in the absence of a monosaccharide. U.S. Patent No. 3,532,514 describes the preparation of a meat-like flavorant from a mixture of an amino acid source, a mono-, di-, tri-, or polysaccharide and an animal or vegetable fat. U.S. Patent No. 3,394,017 describes the preparation of a poultry flavorant by reacting thiamine with a sulfur-containing polypeptide or an amino acid mixture derived therefrom and thereafter adding aldehydes and ketones to the product. British Patent No. 836,694 describes the preparation of cooked meat flavorants by reacting a monosaccharide with the amino acid cysteine and optionally with yet an additional one or more amino acids in the presence of water and at an elevated temperature, the reaction mixture being adjusted such that it is not alkaline at the end of the reaction.

GB—A—1115610 discloses the preparation of meatlike flavours by reacting (a) a source of fatty acids or fatty acid esters with (b) a phosphorus compound, (c) an amino acid and (d) a sugar. It will thus be observed that (a) and (b) are essential reaction ingredients and the particular flavour (beef/chicken) is produced by using the corresponding fat in the reaction mixture. A blend of fatty acids, as shown in Table 2 and Example 1, produces a flavour that is only described as "cooked meat". In all the examples, the same amounts of the same amino acids are used and the respective ratios of sulphur-containing compound (thiamine derivative) and monosaccharide to L-leucine are, respectively, 0.1:1 and 6.3:1.

GB—A—1032334 describes methods for preparing meatlike flavours based on the reaction of amino acids, provided as protein hydrolysates, sulphur-containing compounds and monosaccharides. The respective ratios of sulphur compound and monosaccharide to total amino acids, obtained by derivation, are 0.002—0.02:1 and 0.005—0.4:1. The amino acids are non-specific, varying with the raw material used for preparing the protein hydrolysate, and the the flavour likewise—simply meatlike.

While various amino acids have been used in conjunction with other reactants to prepare meatlike flavorants, no one until applicant has discovered that a particular amino acid, namely, leucine or its food acceptable salts is able to specifically produce a chicken flavorant when reacted with a sulfur-containing compound and a reducing monosaccharide. Without leucine, the mere reaction of the sulfur-containing compound and the reducing monosaccharide, alone, or even in combination with other amino acids, simply does not produce a chicken flavorant at all, much less, a chicken flavorant having a high intensity and an organoleptic profile which most closely simulates natural cooked or roast chicken.

This is quite surprising for leucine has long been associated with the preparation of either bread or cheese flavorants. While leucine may have been employed in conjunction with the preparation of a meat-like flavoring agent, it has never been associated with the production of a highly specific chicken flavorant.

More particularly, applicant has found that an enhanced and intensified chicken flavorant may be obtained by reacting leucine and/or its salts with a sulfur-containing compound and a reducing monosaccharide in the presence of a hydroxylated solvent.

In a preferred embodiment of the present invention, serine and/or its food acceptable salts are additionally reacted with the leucine, sulfur-containing compound and reducing monosaccharide to even further enhance and intensify the chicken flavorants produced.

Yet additional embodiments include the presence of chicken fat to provide an even more characteristic profile and/or hydrolyzed animal or plant proteins to produce a more full bodied flavor.

The chicken flavorants of the present invention offer the additional advantages of exhibiting shelf stability for over one year at room temperature and do not require refrigeration. Still further, the intensity of the chicken flavorants are 1 to 4 times greater than freshly cooked or roast chicken on a dry solids basis. Finally, the chicken flavorants of the present invention also exhibit excellent heat processing stability.

The process for preparing the chicken flavorants of the present invention comprises combining leucine and/or its salts with a sulfur-containing compound and a reducing monosaccharide in the presence of a hydroxylated solvent and then reacting this mixture to form the flavorant. In a preferred embodiment, the reaction mixture also contains serine and/or its salts.

Either leucine and/or its food acceptable salts may be employed in the present invention. Such salts include, but are not limited to, leucine hydrochloride, leucine nitrate, leucine sulfate, leucine phosphate, etc. When serine is optionally employed in a preferred embodiment as a constituent of the reaction, it too may be used alone and/or with its food acceptable salts which salts are similar to the leucine salts noted above. By employing serine or its salts in the reaction of the present invention, the chicken flavorant produced is further intensified and enhanced. Serine is optionally employed in the present invention in an amount of from about 0 to about 1.0 part by weight per part by weight of leucine. Generally, the "L-" form of the amino acid(s) is used for it is this form which occurs most frequently in nature and is more readily available. However, the "D-" configuration or the "DL-" racemic mixture may also be employed in the reaction.

Suitable sulfur-containing compounds include, but are not limited to, sulfur-containing amino acids, peptides, or polypeptides which under the conditions of the reaction liberate hydrogen sulfide, lower alkyl mercaptans, or lower alkyl sulfides or disulfides or may include inorganic sulfur compounds, or hydrogen sulfide itself. Such inorganic sulfur compounds may include the sulfides or hydrosulfides of alkali or alkaline earth metals or ammonia. In the context of the present invention, where a sulfur-containing compound is referred to, it is understood that any one or more of the above-noted sulfur-containing compounds may be employed at any one time in the reaction medium.

Specific examples of some sulfur-containing compounds are cysteine, cystine, thiamine, methioine, glutathione, 2-amino-ethanesulfonic acid or their salts, and the like. Sulfur compounds may also be derived from plants of the *Allium* or *Cruciferae* species.

Generally, from about 0.5 to about 55.0 parts by weight and preferably, from about 2.0 to about 10.0 parts of the sulfur-containing compound are employed per part by weight of leucine in the reaction mixture.

The reducing monosaccharides include hexoses and/or pentoses, either alone or in combination with one another. Typical hexoses include mannose, glucose, galactose, talose, gulose, idose, 6-deoxy-L-mannose, 6-deoxy-L-galactose, etc. Typical pentoses include ribose, arabinose, lyxose, xylose, etc. One or more of these reducing monosaccharides may be used in admixture with the remaining reaction constituents.

From about 0.2 to 5.0 parts by weight and preferably, from about 0.5 to 2.0 parts of the reducing monosaccharide are generally employed per part by weight of leucine in the reaction mixture. It is noted that within these prescribed ranges, a higher concentration of monosaccharide is typically used if a roast chicken flavor profile is desired.

The reaction is preferably carried out at atmospheric pressure in any hydroxylated solvent in which the reactants are soluble. Such solvents include water, alcohol, glycerol, propylene glycol, etc., all of which can readily be determined by one skilled in the art. Preferably, however, the reaction is carried out in an aqueous environment. The amount of solvent employed is not critical and can vary depending upon the method employed for recovering the resulting flavorant, *i.e.*, vacuum drying, spray drying, etc. The amount of solvent used is also dictated by the specific organoleptic profile the resulting chicken flavorant will have. Thus, a roast chicken flavor may be produced by using smaller quantities of solvent. Generally, the amount of solvent can vary between about 10 to 50% by weight of the reaction mixture and preferably is about 20 to 30%.

The mixture of leucine, sulfur-containing compound, reducing monosaccharide and solvent is then reacted to form the chicken flavorants of the present invention. The reaction is carried out at elevated temperatures, normally at a temperature in the range of from about 50° to about 130°C and, more preferably, in the range of from about 90° to about 110°C for a period of about 0.5 to 4.0 hours and preferably, from about 1.0 to 1.5 hours. Generally, the reaction is carried out until the desired organoleptic profile is obtained, *i.e.*, a boiled or roast chicken flavor. Applicant has found that the color of the reaction product is generally indicative of the nature of the flavorant. Thus, during the reaction, an amount of color is developed which increases with reaction time for a specific temperature. Such color development can be measured by analytical instruments well known to those skilled in this art, such as a spectrophotometer which transmits selected wavelengths of light passing through a designated volume of the reaction product. Accordingly, one can correlate a given organoleptic profile (boiled or roast chicken note) with the amount of color that has developed during the reaction.

By varying the reaction parameters of temperature, time, and solvent content within the ranges set forth above, it is possible to alter the organoleptic profile of the resulting chicken flavorant to have either cooked white meat chicken flavor characteristics, cooked dark meat chicken flavor characteristics, or alternatively, roast or fried chicken meat flavor characteristics. In the context of the present specification, it is understood that a cooked white meat chicken flavorant as prepared by the process of the present invention is characteristic of the particular flavor and aroma profile imparted to those portions of a chicken having predominantly light flesh by means of a heating process such as boiling, stewing, baking and the like. The cooked dark meat flavor is, of course, characteristic of cooking those chicken parts which have predominantly dark flesh and is described as having a "fattier" or "mustier" flavor note than cooked white meat. The roasted or fried chicken flavorant of the present invention has an organoleptic profile which is characteristic of naturally roasted or broiled chicken, particularly, roasted or broiled chicken skins.

Generally, the higher the temperature, or the longer the reaction time, or the less solvent present in the reaction medium, a chicken flavorant is produced which tends to have a roast or fried chicken flavor profile. Conversely, the lower the temperature, the shorter the reaction time, or the greater the amount of solvent present, leads to a chicken flavorant having a cooked chicken flavor profile. Thus, for example, at 100°C and at a solvent content of 20% by weight based on the weight of the reaction medium and a reaction time of about 45 to 60 minutes, a cooked chicken meat flavorant is generated. By keeping all of the parameters constant and simply raising the temperature to about 110°C, a roast chicken flavorant is produced. Of course, different nuances of chicken flavor characteristics may be obtained by varying the parameters of temperature, reaction time and solvent content within the ranges noted, which one skilled in the art can readily determine.

The pH at which the reaction is carried out is not critical and can vary between a pH of from about 1 to 8 with a pH of from about 3.5 to 6.5 being preferred. At lower pH values, the reactants tend to solubilize more completely and readily thereby reducing the length of reaction time. After the reaction is complete and regardless of what the pH may have been during the reaction, in order to obtain an optimum chicken flavor having both high intensity and an organoleptic profile most similar to natural chicken flavor, the pH should desirably be adjusted to a value of from 5 to 7 and preferably from about 5.5 to 6.5. The adjustment of the pH may be carried out by adding either food acceptable acids or bases which are well within the knowledge of those skilled in the art.

In addition to the leucine, a sulfur-containing compound and a reducing monosaccharide, in order to even further enhance and intensify the chicken flavorants produced in the present invention, it may also be desirable to add chicken fat to the reaction mixture. The chicken fat may be added either before or after the reaction has taken place. Although chicken fat is certainly not required in the present invention in order to generate an intense and characteristic chicken flavorant, the presence of the chicken fat does improve the resulting flavor by providing an even greater characteristic profile of natural chicken flavor. Moreover, the presence of the chicken fat also produces flavorants which are more characteristic of dark chicken meat. Generally, the amount of fat employed will vary between 1.5 to 30% by weight based on the total weight of the reaction mixture, with 5 to 10% being preferred.

Still further, in order to obtain a more full bodied flavor, it may also be desirable to add hydrolyzed animal or plant proteins either prior to or after the reaction. Hydrolysates are well known and are readily obtained from a variety of proteinaceous materials. Vegetable protein hydrolysates, for example, may be obtained from wheat germ, corn gluten, soy protein, linseed protein, peanut press cake, yeast and the like. Meat protein hydrolysates can be derived from any meat source such as chicken, beef, lamb, pork, fish, and the like. The most preferred meat protein hydrolysates is derived from chicken meat inasmuch as it will not only provide the more full bodied flavor but in addition thereto, will also add to the characteristic profile of the resulting chicken flavorant.

Generally, the amount of either animal or vegetable protein hydrolysate employed in the present invention will vary from about 10 to about 90% by weight based on the total weight of the reaction mixture, with 60 to 80% being preferred.

After the reaction is complete, the flavorant may be used as is, or alternatively, be recovered from solution by any conventional means such as by spray-drying, vacuum-drying, freeze-drying, and the like. Alternatively, the reaction product may also be dried with a conventional carrier system such as malto-dextrin, dextrins, or modified starches, the quantity of such a carrier being dictated by the solvent concentration of the reaction medium.

If desired, flavor potentiators or enhancers such as spices, condiments, monosodium glutamate, 5'-nucleotides and the like may also be combined with the resulting chicken flavorant. Alternatively, some of these additives may also be combined with the mixture prior to reaction.

The chicken flavorants of the present invention may be incorporated in soups and soup mixes, casserole dishes, canned and frozen vegetables, animal or pet foods, sauces, gravies, stews, simulated chicken meat products, chicken meat spreads and dips, bakery products, as a replacement for chicken extract, and the like.

The amount of chicken flavorant employed will be dependent, of course, upon the specific application. Generally, however, an amount of from about 0.1 to 4.0% by weight of chicken flavorant produced by the present invention and preferably, about 0.5 to 1.0% by weight is usually enough to impart a chicken flavor to the foodstuff having the intensity, flavor and aroma characteristics that would normally be associated with freshly cooked or roast chicken. For example, the addition of about 0.5 to 1.0 parts by weight of chicken flavorant prepared by the process of the present invention added to a vegetable protein material such as texturized soy protein will impart an organoleptic profile to the soy protein material of freshly cooked chicken.

Having described the basic concepts of this invention, the following Examples are set forth to illustrate the same in which the parts and percentages are by weight. These Examples are not, however, to be construed as limiting the invention in any manner.

Example 1

A chicken flavorant having the characteristic flavor and aroma of freshly cooked white chicken meat is prepared from the following constituents:

| | |
|---|---:|
| L-Cystine | 1.50 gm |
| L-Leucine | 1.50 gm |
| L-Arabinose | 0.20 gm |
| Glucose | 0.45 gm |
| Water | 5.00 gm |

The constituents are mixed together and heated to 85°C for 1 hour at an initial pH of 5.0.

When the reaction is complete, the pH is adjusted to 6.0 by using sodium hydroxide.

The reacted mixture is then dried by vacuum tray drying to a moisture content of about 2% by weight.

The resulting flavorant has an intense, characteristic flavor and aroma of freshly boiled white chicken meat

Example 2

In this Example, the same reaction constituents as in Example 1 are employed. Here, however, following the reaction, various optional ingredients are added to the reaction product so as to enhance and intensify the chicken flavorant produced. In addition thereto, a slightly higher temperature is employed for a slightly longer reaction time.

In particular, the following constituents are mixed together and heated to 100°C for 1½ hours in a vessel equipped with a reflux condenser to reduce the loss of water and volatiles during reaction:

| | |
|---|---:|
| L-Cystine | 1.50 gm |
| L-Leucine | 1.50 gm |
| L-Arabinose | 0.20 gm |
| Glucose | 0.45 gm |
| Water | 5.00 gm |

Following the reaction, the product is blended with the following additives:

| | |
|---|---:|
| Hydrolyzed corn protein | 73.75 gm |
| Chicken fat | 1.50 gm |
| Disodium inosinate | 0.30 gm |
| Disodium guanylate | 0.30 gm |
| Water | 11.00 gm |

As a result of blending the various additives to the reaction product, a paste is formed whose pH is adjusted to a value of between 5.5 and 6.0. The flavorant is then recovered by vacuum tray drying to a solids content of 98% by weight.

The addition of the amino acids of the protein hydrolysate to the reaction product results in a background, general meaty note. Furthermore, the overall impression of chicken flavor is enhanced by the addition of the hydrolysate, fat and nucleotides.

When compared to the chicken flavorant prepared in Example 1, the dried chicken flavor of the present Example has a richer and more full bodied flavor and has an organoleptic profile which is even more characteristic of natural cooked white meat chicken.

Example 3
(Comparison Example)

This Example is not in accordance with the process of the present invention. Here, the process is carried out without the presence of leucine.

The process of Example 2 is identically repeated with the only exception being that leucine is not present. All of the other constituents including the chicken fat, hydrolyzed corn protein, etc., are present and all of the processing variables remain the same.

The resulting reaction product, when dried, has a pleasant "hydrolyzed protein/sulfur" note but is not reminiscent of cooked chicken meat at all. In other words, without leucine present, a chicken flavorant is simply not produced.

Example 4

The process of Example 2 is once again repeated with the only exception being that the glucose is replaced with 0.45 gm of 6-deoxy-L-mannose also known as (L-rhamnose). All of the remaining constituents and reaction steps remain the same.

The resulting dried product has the desirable white chicken meat organoleptic profile of the flavorant produced in Example 2, however, it is approximately two times as intense.

As in Example 2, the protein hydrolysate adds background, general meaty nuances which aid in providing a more complete meat flavor. The use of L-rhamnose in lieu of glucose provides a more aromatic, meaty characteristic chicken flavor.

As a result of the increased intensity obtained by employing L-rhamnose, the quantity of this flavorant used in any application can be reduced to one-half of the amount required for the product of Example 2 in order to obtain a particular flavoring effect while still retaining the same flavor intensity and nuances.

Example 5

In this Example, Example 2 is once again repeated with the only exception being that in addition to all of the reaction constituents set forth in Example 2, 1.50 gms of L-serine are also included. The remaining additives which are blended with the reaction product after the reaction is complete and all of the processing variables remain identical.

The chicken flavorant produced in this Example, when compared to the flavorant produced in Example 2, has an even more characteristic white meat chicken flavor due to the addition of the serine. Thus, it is seen that while the hydrolyzed corn protein and the amino acids and salts derived therefrom do provide background flavor notes, they do not contribute to a more characteristic chicken meat flavor. So, too, the presence of chicken fat, while it does increase the characteristic chicken profile, by adding serine to the reaction mixture, as evidenced by this Example, the resulting characteristics of the chicken flavorant is even more greatly enhanced.

Example 6

A chicken flavorant having a roasted chicken meat profile is prepared from the following constituents:

| | |
|---|---|
| L-Cystine | 1.50 gm |
| L-Leucine | 1.50 gm |
| L-Serine | 1.50 gm |
| L-Arabinose | 0.20 gm |
| Glucose | 0.45 gm |
| Water | 3.00 gm |

The reaction mixture having a pH of 4.5 is heated to a temperature of 105°C for 1½ hours in a vessel equipped with a reflux condensor to retain water and volatiles during the reaction.

Following the reaction, the product is blended with the following additives:

| | |
|---|---|
| Hydrolyzed corn protein | 52.85 gm |
| Chicken fat | 1.50 gm |
| Malto-dextrin | 25.00 gm |
| Water | 11.00 gm |

The pH of the resulting paste is then adjusted to a value of between 5.5 and 6.0 and is recovered by vacuum tray drying to a solids content of 98% by weight.

The protein hydrolysate and remaining additives provide a non-specific background meaty note which helps impart a more complete profile when blended with the highly specific chicken reaction product.

The resulting dried product has the flavor and aroma of roasted chicken meat which is most similar in profile to that of freshly broiled chicken skins.

Example 7

In this Example, the heat processing stability of the flavorant produced by the present invention is demonstrated.

In particular, the chicken flavorant produced in Example 5 is added to a cream of chicken soup base in an amount of 0.5% by weight based on the total weight and heat processed in a sealed can.

Heat processing is accomplished using a rotary retort apparatus at approximately 115°C for about ½ hour.

After the heat processing step, the product is evaluated by comparison with the flavored soup base prior to processing. The heat treated product shows excellent heat processing stability and has lost little of its chicken meat flavor intensity. In addition, there are no off-flavor notes detectable in the heat processed product.

Example 8

A chicken flavorant having the characteristic flavor and aroma of freshly cooked white chicken meat is prepared from the following constituents:

| | |
|---|---|
| L-Cysteine HCl | 3.00 gm |
| L-Leucine HCl | 1.50 gm |
| L-Arabinose | 0.20 gm |
| Glucose | 0.45 gm |
| Water | 5.00 gm |

The constituents are mixed together and heated to 85°C for 1 hour at a pH of 4.5. Following reaction, the pH is adjusted to between 5.5 and 6.0 using sodium hydroxide.

The resulting flavorant has the aroma and flavor of freshly cooked chicken.

Example 9

A chicken flavorant having the characteristic flavor and aroma of freshly roasted chicken, more specifically roasted chicken skin, is prepared from the following constituents:

| | |
|---|---|
| Sodium Sulfide (Na$_2$S) | 0.70 gm |
| L-Leucine | 1.50 gm |
| L-Serine HCl | 1.50 gm |
| L-Arabinose | 0.20 gm |
| Glucose | 0.45 gm |
| Water | 4.00 gm |

The mixture is heated to 115°C under reflux for 1 hour. Following reaction the pH of the reaction is adjusted to between 5.5 and 6.0 using sodium hydroxide.

The resulting flavorant has the aroma and flavor of freshly roasted chicken skin.

Example 10

A dark meat chicken flavorant is prepared from the following constituents:

| | |
|---|---|
| L-Cysteine HCl | 3.00 gm |
| L-Leucine | 1.50 gm |
| L-Serine | 1.50 gm |
| L-Arabinose | 0.25 gm |
| Glucose | 0.50 gm |
| Water | 4.00 gm |
| Chicken Fat | 3.00 gm |

The mixture is heated to 100°C for 1 hour under reflux. Following reaction, the pH of the medium is adjusted to between 5.5 and 6.0 using sodium hydroxide.

The resulting flavorant imparts a heavier, fattier chicken aroma and flavor similar to dark chicken meat.

Example 11

This Example illustrates the use of a polypeptide, particularly glutathione, as the required sulfur-contaiing compound in the reaction.

The following constituents were reacted at 100°C for 1½ hours under reflux at an initial pH of 4.5:

| Glutathione | 9.00 gm |
| L-Leucine | 1.50 gm |
| L-Arabinose | 0.20 gm |
| Glucose | 0.45 gm |
| Water | 5.00 gm |

Following the reaction, the pH was adjusted to between 5.5 and 6.0 using sodium hydroxide.

The resulting flavorant had the aroma and flavor of freshly baked white chicken meat.

## Claims

1. A process for preparing a meatlike flavour by reacting together in an aqueous medium one or more amino acids, sulphur compounds and monosaccharides, characterised in that a chicken flavorant is obtained by reacting a mixture of:

(a) leucine and/or its salts;

(b) from 0.5 to 55.0 parts by weight of a sulphur-containing compound per part by weight of leucine and/or its salts;

(c) from 0.2 to 5.0 parts by weight of a reducing monosaccharide per part by weight of leucine and/or its salts;

(d) from 0 to 1.0 part by weight of serine and/or its salts per part by weight of leucine and/or its salts; and

(f) from 10 to 50% by weight of a hydroxylated solvent based on weight of the total reaction mixture.

2. The process of claim 1 wherein the reaction is carried out at a temperature of from 50 to 130°C for a period of 0.5 to 4.0 hours.

3. The process of claim 1 or claim 2 wherein the reaction is carried out at a pH of 1 to 8 and after reaction it is adjusted to a value of 5 to 7.

4. The process of any preceding claim wherein chicken fat is added before or after the reaction.

5. A chicken flavorant obtainable by a process according to any preceding claim.

## Patentansprüche

1. Verfahren zur Herstellung eines fleischähnlichen Aromastoffes durch gemeinsames Umsetzen einer oder mehrerer Aminosäuren, Schwefelverbindungen und Monosaccharide in einem wäßrigen Medium, dadurch gekennzeichnet, daß ein Hünner-Aromastoff erhalten wird durch Umsetzung eines Gemisches aus:

(a) Leucin und/oder seinen Salzen;

(b) von 0,5 bis 55,0 Gewichtsteilen einer Schwefel enthaltenden Verbindung je Gewichtsteil Leucin und/oder seinen Salzen;

(c) von 0,2 bis 5,0 Gewichtsteilen eines reduzierenden Monosaccharids je Gewichtsteil Leuchen und/oder seinen Salzen;

(d) von 0 bis 1,0 Gewichtsteilen Serin und/oder seinen Salzen je Gewichtsteil Leucin und/oder seinen Salzen; und

(f) von 10 bis 50 Gewichts-% eines hydroxylierten Lösungsmittels, bezogen auf das Gewicht des gesamten Reaktionsgemisches.

2. Verfahren nach Anspruch 1, worin die Umsetzung bei einer Temperatur von 50 bis 130°C während einer Zeitdauer von 0,5 bis 4,0 Stunden ausgeführt wird.

3. Verfahren nach Anspruch 1 oder 2, worin die Umsetzung bei einem pH-Wert von 1 bis 8 ausgeführt und dieser nach der Umsetzung auf einen Wert von 5 bis 7 eingestellt wird.

4. Verfahren nach einem vorstehenden Anspruch, worin vor oder nach der Umsetzung Hühnerfett zugesetzt wird.

5. Hühner-Aromastoff, erhältlich nach einem Verfahren gemäß irgendeinem vorstehenden Anspruch.

## Revendications

1. Procédé de préparation d'un agent aromatisant ayant une flaveur analogue à celle de la viande, consistant à faire réagir ensemble dans un milieu aqueux, un ou plusieurs amino-acides, composés soufrés et monosaccharides, caractérisé en ce qu'un agent aromatisant a poulet est obtenu en faisant réagir un mélange comprenant:

(a) de la leucine et/ou ses sels;

(b) 0,5 à 55,0 parties en poids d'un composé soufré par partie en poids de leucine et/ou de ses sels;

(c) 0,2 à 5,0 parties en poids d'un monosaccharide réducteur par partie en poids de leucine et/ou de ses sels;

(d) 0 à 1,0 partie en poids de sérine et/ou de ses sels par partie en poids de leucine et/ou de ses sels; et

(f) 10 à 50% en poids d'un solvant hydroxylé, sur la base du poids du mélange réactionnel total.

2. Procédé suivant la revendication 1, dans lequel la réaction est conduite à une température de 50 à 130°C pendant un temps de 0,5 à 4,0 heures.

3. Procédé suivant la revendication 1 ou la revendication 2, dans lequel la réaction est conduite à un pH de 1 à 8, ce pH étant ajusté après réaction à une valeur comprise dans l'intervalle de 5 à 7.

4. Procédé suivant l'une quelconque des revendications précédentes, dans lequel de la graisse de poulet est ajoutée avant ou apres la réaction.

5. Agent aromatisant au poulet pouvant être obtenu par la mise en oeuvre d'un procédé suivant l'une quelconque des revendications précédentes.